Europäisches Patentamt

European Patent Office

Office européen des brevets

(19)

(11) Publication number: **0 392 121**
**A2**

(12) # EUROPEAN PATENT APPLICATION

(21) Application number: **89313025.2**

(22) Date of filing: **13.12.89**

(51) Int. Cl.5: **C09C 1/50**

(30) Priority: **10.04.89 US 335441**

(43) Date of publication of application:
**17.10.90 Bulletin 90/42**

(84) Designated Contracting States:
**DE ES FR GB IT NL SE**

(71) Applicant: **COLUMBIAN CHEMICALS COMPANY**
**1600 Parkwood Circle Suite 400**
**Atlanta Georgia 30339(US)**

(72) Inventor: **Wyatt, Glenn Ollie**
**Route 1, Box 13**
**Collinston, Louisiana 71229(US)**

(74) Representative: **Dealtry, Brian et al**
**Eric Potter & Clarkson St. Mary's Court St.**
**Mary's Gate**
**Nottingham NG1 1LE(GB)**

(54) Carbon black reactor with an elongated choke and method for producing carbon black therewith.

(57) A carbon black reactor having an elongated choke reduces the presence of impingement coke and refractory grit in the carbon black product, provides for the production of super fine particle carbon black, narrow particle size distribution carbon black, and high surface activity carbon black. The elongated choke has a length sufficient for substantial completion of the carbon black forming reaction within the choke.

EP 0 392 121 A2

# CARBON BLACK REACTOR WITH AN ELONGATED CHOKE AND METHOD FOR PRODUCING CARBON BLACK THEREWITH

## Technical Field

This invention relates generally to the production of carbon black, and specifically relates to the more effective control of carbon black forming reaction conditions within carbon black reactors.

## Background of the Invention

The basic method for the production of carbon black is well known. Generally, carbon black is produced by injecting a hydrocarbon raw material (hereinafter called "feedstock hydrocarbon") into a flow of hot oxygen-containing gas wherein the feedstock hydrocarbon is pyrolyzed and converted into a smoke before being quenched by a water spray. The hot gas is produced by burning fuel in a combustion chamber. The hot gas flows from the combustion chamber into an reaction chamber which is in open communication with the combustion chamber. The feedstock hydrocarbon is introduced into the hot gas as the hot gas flows through the reaction chamber, thereby forming a reaction mixture comprising particles of forming carbon black. The reaction mixture flows from the reactor into an exit chamber which is in open communication with the reaction chamber. At some location in the exit chamber, a quench spray is introduced into the flowing reaction mixture thereby lowering the temperature of the reaction mixture below the temperature necessary for carbon black production and halting the carbon formation reaction. The carbon black particles are then separated from the flow of hot gas.

Conventional carbon black reactors normally comprise a cylindrical combustion chamber axially connected to one end of a cylindrical or frusto-conical reaction chamber. A reaction choke is often axially connected to the other end of the reaction chamber. The reaction choke normally has a length which is equal to or slightly longer than the diameter of the choke, about eight inches. The diameter of the reaction choke is normally substantially less than the diameter of the reaction chamber. The choke connects the reaction chamber to an exit chamber which is normally cylindrical and has a diameter which is substantially larger than the diameter of the reaction choke. Because the diameter of the exit chamber is substantially larger than the diameter of the reaction choke, there is an abrupt, ninety degree expansion in diameter from the reaction choke to the exit chamber.

During operation of these abrupt expansion reactors, the feedstock hydrocarbon is introduced into the flow of hot gas as the flow of hot gas passes through the reaction chamber and choke, thereby forming a flowing reaction mixture comprising hot gas and particles of forming carbon black. As the flowing reaction mixture passes from the reaction choke into the exit chamber, the flowing reaction mixture is subjected to an immediate expansion. As a result, some of the reaction mixture flows laterally towards the inner wall of the exit chamber from the reaction choke and forms eddies in the exit chamber near the outlet of the reaction choke. This effect is often referred to as "backmixing." The abrupt expansion of the reaction mixture can affect various properties of the resulting carbon black which, in turn, affect the performance of the carbon black in various applications. Carbon black is primarily used to reinforce elastomeric compounds, such as the rubber in automobile tires, and is also used as a black pigment in inks, paints, plastic, xerographic toner, and elastomeric compounds.

For example, the abrupt expansion of the reaction mixture in conventional carbon black reactors affects a property of carbon black called the particle size distribution. The particle size distribution is a measure of the uniformity of size of the individual particles of carbon black. Carbon blacks with a narrow particle size distribution are carbon blacks wherein the individual particles of the carbon black are substantially uniform in size. Carbon blacks with a broad particle size distribution are carbon blacks wherein the individual particles of the carbon black vary relatively widely in size. Narrow particle size distribution carbon blacks impart improved traction and skid properties to rubber, and broad particle size distribution carbon blacks impart improved rolling resistance and tread wear properties to rubber.

The homogeneity of the reaction conditions as the reaction mixture passes through the reactor affects the particle size distribution of the carbon black. More homogeneous reaction conditions result in a more narrow particle size distribution carbon black. Likewise, less homogeneous reaction conditions result in a more broad particle size distribution carbon black. The backmixing of the reaction mixture in conventional, abrupt expansion reactors can disrupt the homogeneity of the reaction conditions of the reaction mixture passing through the reactor and inhibit the production of more narrow particle size distribution carbon blacks.

Another property of carbon black affected by the abrupt expansion of the reaction mixture in conventional carbon black reactors is the surface activity. The surface activity of a carbon black is defined as the ability of the carbon black to interact physically or chemically with the compound or mixture in which the carbon black is mixed. The overall state of disorder of the carbon black particles affects the surface activity of the carbon black. As the overall state of disorder of the carbon black increases, the surface activity of the carbon black increases. The carbon black particles comprise layers of graphitic carbon. Less continuity in the graphitic layers and more structural defects in the graphitic layers increase the overall state of disorder and the surface activity of the carbon black. The presence of unpaired electrons and free radicals in the carbon black particles also increases the overall state of disorder and the surface activity of the carbon black.

The presence of carbon-bound hydrogen on the exposed edges of the graphitic layers of the carbon black particles increases the surface activity of the carbon black. The carbon-bound hydrogen also aids in maintaining the state of disorder of the carbon black by preventing the graphitic layers at the surface of the carbon black particles from aligning and becoming more continuous. The presence of carbon-bound hydrogen and overall state of disorder of the carbon black contribute primarily to the surface activity of carbon blacks in high unsaturation elastomers such as styrene-butadiene rubber (SBR), butadiene rubber (BR), and natural rubber (NR). The ability of carbon black to reinforce elastomers such as these is generally thought to be due to the physical interaction between the graphitic layers at the outer surface of the carbon black particles and the elastomer. However, it has also been demonstrated that the carbon-bound hydrogen on the carbon black particles can be transferred to the elastomer during mixing, thereby forming active sites on the surface of the carbon black particles for covalent bonding to the elastomer. The reinforcement of the elastomer by carbon black results in an elastomeric composition which is more tear resistant, more abrasion resistant, and more readily dissipates energy.

The backmixing of the reaction mixture in conventional reactors causes some of the particles of forming carbon black to reside in the reactor longer than others. Because of the longer residence time in the reactor of those particles of forming carbon black, those particles of forming carbon black are over-reacted. Accordingly, the physical characteristics of those particles of forming carbon black which promote surface activity are substantially destroyed. The carbon-bound hydrogen, unpaired electrons and free radicals are combusted. The additional residence time also allows the graphitic layers to become more aligned and more orderly, and the additional exposure to high temperatures tends to harden and smooth the outer surface of the carbon black particles. The end result is a carbon black with low surface activity.

Therefore, there is a need for a carbon black reactor which keeps backmixing of the reaction mixture to a minimum and provides for more effective control of the carbon black forming reaction.

## Summary of the Invention

The present invention solves the above described problems in the prior art by providing a carbon black reactor having an elongated choke. The reactor provides a flow of hot gas through the choke and introduces feedstock hydrocarbon into the flow of hot gas thereby creating a carbon black forming reaction which travels through the choke. The choke has a length sufficient to permit substantial completion of the carbon black forming reaction within the choke. Because the carbon black forming reaction is completed within the choke, there is no abrupt expansion of the reaction mixture during the carbon black formation. Accordingly, the detrimental effects of backmixing on the properties of carbon black are substantially avoided.

More specifically, the apparatus of the present invention comprises a reaction chamber having an inlet opening and an outlet opening, and an elongated choke connected to the reaction chamber also having an inlet opening and an outlet opening. The reactor produces a flow of hot gas which flows through the reaction chamber, into the choke, and through the choke. Feedstock hydrocarbon is introduced into the flow of hot gas proximate the outlet opening of the reaction chamber to create the carbon black forming reaction.

Without the abrupt expansion of the reaction mixture, backmixing of the reaction mixture is substantially eliminated and there is less tendency for the particles of forming carbon black to impinge against the walls of the reactor. Thus, the elongated choke provides for homogeneous reaction conditions throughout the carbon black forming reaction and thus is capable of producing a relatively narrow particle size distribution carbon black. Further, the elongated choke provides for the production of carbon black having a high surface activity. Without backmixing, the flow of the reaction mixture through the choke is a substantially plug flow, thus the amount of time the reaction mixture is subjected to carbon black forming conditions is substantially uniform and short. As a result, substantially the entire reaction mixture is uniformly reacted and the over-reaction of portions of the reaction mixture is substantially eliminated. Also, because there is no expansion and slowing of the reaction mixture during the carbon black forming reaction, the average time the reaction mixture is subjected to carbon black forming conditions is reduced. Accordingly, carbon-bound hydrogen, unpaired electrons, and free radicals on the surface of the carbon black particles are less likely to be combusted. In addition the graphitic layers of the carbon black particles have less time to become aligned and the structural defects in those layers remain intact.

Still more specifically, the present invention provides for axial flow of hot gas through the reaction chamber in the elongated choke. With axial flow, the particles of forming carbon black are less likely to impinge on the inner walls of the reaction chamber and choke because the axial flow of hot gas carries the particles of forming carbon black axially through the reactor. Accordingly, the particles of forming carbon black travel substantially parallel to the central longitudinal axis and the inner walls of the reactor, and the formation of coke and refractory grit contaminants is substantially reduced. Further, because the particles of forming carbon black are less likely to impinge on the inner walls of the reactor, the feedstock hydrocarbon can be introduced at a greater rate into the axial flow of hot gas thereby increasing the intensity of the feedstock hydrocarbon in the flow of hot gas. Accordingly, the yield of the carbon black produced per unit of hot gas per unit of feedstock hydrocarbon is improved.

Even more specifically, the present invention includes a plurality of ports along the elongated choke for introducing additives and temperature-measuring devices into the flow of hot gas and particles of forming carbon black. Appropriate additives can be used to further alter the properties of the carbon black.

Therefore, an object of the present invention is to provide an improved apparatus and method for the production of carbon black.

Another object of the present invention is to provide an apparatus and a method for producing carbon black which provide for more effective control of the carbon black forming reaction conditions.

Another object of the present invention is to provide an apparatus and a method for producing carbon black which provide for minimal backmixing of the reaction mixture.

A further object of the present invention is to provide an apparatus and a method for the production of a variety of carbon blacks having a wide range of properties.

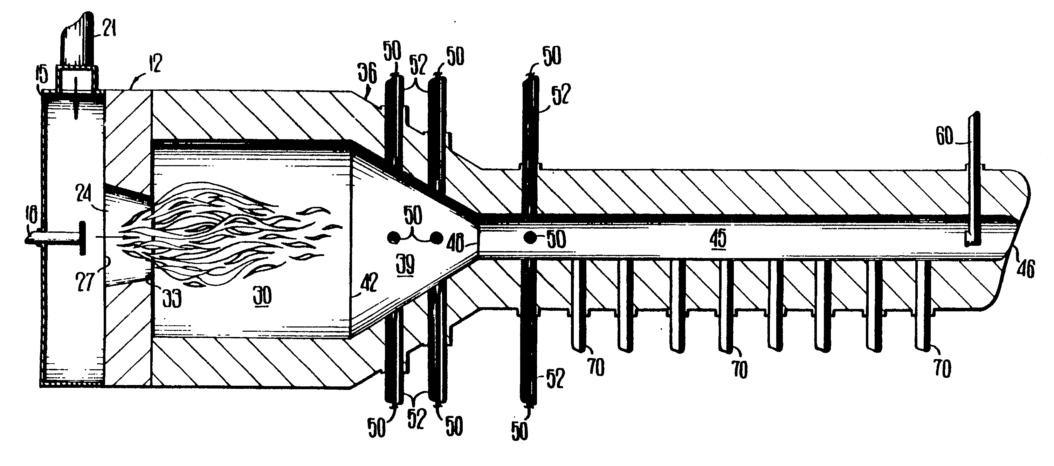

Other objects, features, and advantages will become apparent from reading the following specifications in conjunction with the accompanying drawing.

## Brief Description of the Drawing

The Figure is a schematic sectioned plan view of a carbon black reactor according to a preferred embodiment of the present invention.

## Detailed Description of the Preferred Embodiment

Turning to the Figure, a carbon black reactor 10 is shown comprising a combustion section 12. The combustion section 12 comprises a cylindrical air inlet chamber 15 having an inlet openmg 18 in the upstream end of the air inlet chamber for the introduction of the hydrocarbon burner and a second opening 21 in the peripheral wall of the air inlet chamber for the introduction of an oxygen-containing gas. A combustion choke 24 extends from the downstream end of the air inlet chamber 15 and is axially aligned with the air inlet chamber. The combustion choke is in open communication with the air inlet chamber 15 through an opening 27 in the downstream end of the air inlet chamber. A cylindrical combustion chamber 30 is mounted to the downstream end of the combustion choke 24. The combustion chamber 30 is axially aligned with the combustion choke 24 and the air inlet chamber 15 and extends forward from the downstream end of the combustion choke. The combustion chamber 30 is in open communication with the combustion choke 24 through an opening 33 in the upstream end of the combustion chamber.

The reactor 10 also includes a reaction section 36 axially aligned with the combustion section 12. The reaction section 36 comprises a frusto-conical reaction chamber 39 extending forward from the downstream end of the combustion chamber. The reaction chamber 39 is in open communication with the combustion chamber 30 through the open downstream end 42 of the combustion chamber. The reaction chamber 39 has an inner diameter which gradually decreases as the reaction chamber converges towards an elongated cylindrical reaction choke 45. The reaction choke 45 extends forward from the converging end of the reaction chamber 39 to an outlet opening 46, and the reaction choke is in open communication with the reaction chamber through an opening 48 in the converging end of the reaction chamber.

As will be described in further detail hereinbeiow during the description of the operation of the preferred embodiment, the choke 45 has a length sufficient to permit substantial completion of the carbon black forming reaction. The length of the choke 45 is preferably substantially greater than the diameter of the choke. The preferred dimensions of the elongated choke 45 are from 7 to 10 inches diameter and from 20 to 140 inches length; however, it should be understood that the dimensions of the choke could be somewhat less or greater than the preferred dimensions as long as the carbon black forming reaction is substantially completed within the choke.

Feedstock hydrocarbon injection nozzles 50 are preferably positioned along the length of the reaction chamber 39 and the reaction choke 45. The feedstock hydrocarbon injection nozzles 50 extend through the outer walls of the reaction chamber 39 and the reaction choke 45 into the interior of the carbon black reactor 10. The injection nozzles 50 are cooled by an annular flow of air through annular conduits 52 which encase the injection nozzles. Although three sets of feedstock hydrocarbon injection nozzles are shown in the Figure, it should be understood that the reactor of the present invention is not limited to a specific number of feedstock hydrocarbon injection nozzles.

A quench spray nozzle 60 extends into the choke 45 at a location distal from the opening 48 in the upstream end of the choke. However, it should be understood that the quench spray nozzle 60 may be positioned at any location along the choke and the specific location of the quench spray nozzle will depend on the carbon black specifications desired as is well known to those skilled in the art. Auxiliary ports 70 are provided along the elongated choke 45 through which flux gas, auxiliary oil, air, steam, water or other additives can be injected into the reaction mixture, thereby providing a wide range of operational parameters. The choke 45 leads to a carbon black recovery system. Carbon black recovery systems are well known to those skilled in the art and thus are not discussed here in detail.

Although the carbon black reactor 10 shown in the figure has a circular cross-section, it should be understood that carbon black reactors having non-circular cross-sections can be used to practice the present invention. Accordingly, although the choke 45 is shown having a circular cross-section, it is only necessary for the practice of the present invention for the choke to define a cross-sectional flow area which is substantially uniform along the length of the choke so that the flow conditions through the choke are substantially uniform.

The carbon black production process begins in the combustion section 12 of the carbon black reactor 10 where a hydrocarbon material such as natural gas is mixed with an oxygen-containing gas such as air and combusted. A quantity of oxygen-containing gas in excess of or equal to the amount necessary for complete combustion of the hydrocarbon material is introduced through the air inlet opening 21 in the air inlet chamber 15. The hydrocarbon material is introduced through the hydrocarbon inlet opening 18 in the air inlet chamber 15. The hot gas produced by the combustion of the hydrocarbon in the oxygen-containing gas flows substantially axially through the reactor 10, that is, the hot gas flows substantially parallel to the longitudinal axis of the reactor. The hot gas flows substantially axially from the air inlet chamber 15, through the opening 27 in the downstream end of the air inlet chamber, axially through the combustion choke 24, through the opening 33 in the upstream end of the combustion chamber 30, and then axially through the combustion chamber towards the reaction chamber 39. As the hot combustion gas flows axially through the converging reaction chamber 39, through the opening 48 in the convergent end of the reaction chamber, and axially through the reaction choke 45, feedstock hydrocarbon is injected through the injection nozzles 50 into the flow of hot combustion gas to create a carbon black forming reaction. The hot oxygen-containing combustion gas pyrolyzes the feedstock hydrocarbon as the feedstock hydrocarbon enters the flow of hot oxygen-containing gas, thereby forming a flowing reaction mixture comprising hot gas and particles of forming carbon black. The flowing reaction mixture travels axially through the reaction choke 45 towards the quench spray discharged by the quench spray nozzle 60. The quench spray, normally water, lowers the temperature of the flow of hot gas to a temperature below that required for carbon black formation, thereby halting or "quenching" the carbon formation reaction. The cooled gas and the particles of formed carbon black then flow from the choke through the outlet opening 46 to a carbon black recovery system.

Because the choke 45 is elongated, the carbon black forming reaction, which begins as the feedstock hydrocarbon is injected into the flow of hot gas, is substantially completed within the choke at high velocity. As described hereinabove, the carbon black forming reaction is preferably quenched before exiting the choke 45. Further, because the choke defines a cross-sectional flow area which is substantially uniform along the length of the choke, the reaction mixture is not subjected to any abrupt expansion before the carbon black forming reaction is substantially completed and quenched.

An advantage of the reactor 10 is that the elongated choke 45 provides for more homogeneous reaction conditions throughout the carbon black forming reaction. Without substantial backmixing during the carbon black forming reaction, substantially all of the particles of forming carbon black can be subjected to the same reaction conditions. Accordingly, provided other operational parameters well known to those skilled in the art are properly adjusted, the reactor 10 is capable of producing a more narrow particle size distribution carbon black. Therefore, the elongated choke 45 also increases the range of particle size distribution which can be produced with the reactor 10.

Another advantage of the reactor 10 is that the surface activity of the carbon black particles can be maintained. The substantially cross-sectional flow area of the choke 45 provides for a substantially plug flow of the reactor mixture throughout the carbon black forming reaction. In plug flow, no element of fluid overtakes or mixes with any other element ahead or behind. Accordingly, the residence times for the entire reactant mixture flowing through the choke is substantially uniform. Further, the choke 45 has a lesser volume than the choke and exit chamber of an abrupt expansion reactor. Thus, the velocity of the reaction mixture can be maintained at high levels throughout the carbon block forming reaction thereby reducing the average residence time of the reaction mixture under carbon black forming conditions. As a result, the particles of forming carbon black in the reaction mixture are not overreacted and the surface activity of the carbon black particles is preserved.

Although the combustion section of the preferred embodiment of the present invention is shown as producing an axial flow through the carbon black reactor, it should be understood that a combustion section which produces tangential flow can also be used with the present invention.

It should be further understood that the foregoing relates only to a preferred embodiment of the present invention, and that numerous changes and modifications therein may be made without departing from the spirit and scope of the invention as defined in the following claims.

## Claims

1. Apparatus for the production of carbon black, comprising:
means for producing a flow of hot gas;
a reaction chamber having an inlet opening for receiving the flow of hot gas and an outlet opening so that the hot gas flows through the reaction chamber;
means proximate the outlet opening of the reaction chamber for introducing feedstock hydrocarbon into the flow of hot gas thereby creating a carbon black forming reaction; and
an elongated choke connected to the reaction chamber having an inlet opening for receiving the flow of hot gas from the reaction chamber and having an outlet opening so that the hot gas flows through the choke, the choke having a length sufficient to permit substantial completion of the carbon black forming reaction within the choke.

2. Apparatus for the production of carbon black as in claim 1, wherein the choke defines a cross-sectional flow area which is substantially uniform along the length of the choke.

3. Apparatus for the production of carbon black as in claim 1, wherein the choke is cylindrical.

4. Apparatus for the production of carbon black as in claim 1, further comprising means for directing the flow of hot gas axially through the reaction chamber and the choke.

5. Apparatus for the production of carbon black as in claim 1, further comprising means for quenching the carbon black forming reaction within the choke.

6. Apparatus for the production of carbon black as in claim 1, wherein the feedstock hydrocarbon introducing means comprises a plurality of feedstock hydrocarbon injection nozzles positioned along the reaction chamber and the choke.

7. Apparatus for the production of carbon black as in claim 1, further comprising a plurality of ports positioned along the length of the choke for introducing additives into the flow of hot gas.

8. Apparatus for the production of carbon black as in Claim 1, wherein
the reaction chamber converges from the inlet opening to the outlet opening.

9. Method for producing carbon black, comprising the steps of:
producing a flow of hot gas;
providing a reaction chamber having an inlet opening for receiving the flow of hot gas and an outlet opening so that the hot gas flows through the reaction chamber;
providing an elongated choke connected to the reaction chamber having an inlet opening for receiving the flow of hot gas from the reaction chamber and an outlet opening so that the hot gas flows through the choke;
directing a flow of hot gas through the reaction chamber and the choke;
introducing feedstock hydrocarbon into the hot gas proximate the outlet opening of the reaction chamber thereby creating a carbon black forming reaction; and
substantially completing the carbon black forming reaction within the choke.

10. Method for producing carbon black as in claim 9 wherein the choke provided defines a cross-sectional flow area which is substantially uniform along the length of the choke.

11. Method for producing carbon black as in claim 9, wherein the choke provided is cylindrical.

12. Method for producing carbon black as in claim 9, wherein the flow of hot gas is directed axially through the reaction chamber and the choke.

13. Method for producing carbon black as in claim 9, further comprising the step of quenching the carbon black forming reaction within the choke.

14. Method for producing carbon black as in claim 9, further comprising the step of introducing additives into the hot gas as the hot gas flows through the choke.

15. Method for producing carbon black as in Claim 9 wherein
the reaction chamber provided converges from the inlet opening to the outlet opening.